(19)

Europäisches
Patentamt
European
Patent Office
Office européen
des brevets

(11) **EP 2 148 328 A1**

(12) **EUROPEAN PATENT APPLICATION**

(43) Date of publication:
**27.01.2010 Bulletin 2010/04**

(51) Int Cl.:
*G10L 19/00* (2006.01)　　*H04M 3/22* (2006.01)

(21) Application number: **08170131.0**

(22) Date of filing: **27.11.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **22.07.2008 US 82648**

(71) Applicant: **Telefonaktiebolaget L M Ericsson (publ)**
**164 83 Stockholm (SE)**

(72) Inventors:
 • **Kilsgård, Martin**
  **S-226 44, Lund (SE)**
 • **Michis, Zoltan**
  **SE-226 46, Lund (SE)**
 • **Andersson, Magnus**
  **SE-262 57, Ängelholm (SE)**
 • **Hansson, Roger**
  **SE-244 60, Furulund (SE)**

(74) Representative: **Boesen, Johnny Peder**
 **Zacco Denmark A/S**
 **Hans Bekkevolds Allé 7**
 **2900 Hellerup (DK)**

(54) **A method and a device and a system for enabling automatic distortion detection of a signal**

(57)　The current invention relates to a method of enabling automatic distortion detection of a signal, the method comprising receiving a plurality of test signals comprising at least one undistorted test signal and at least one distorted test signal; measuring at least one feature of each of the test signals in the plurality of test signals; defining a space of the features with a boundary by sorting the test signals in distorted and undistorted test signals, and defining the boundary such that undistorted test signals are situated within the space and distorted test signals are situated outside the space; whereby a signal may be classified as undistorted by determining a value of the at least one feature of the signal and marking the signal to be classified as undistorted if the value is contained within the space and otherwise marking the signal as distorted.

Fig. 3

EP 2 148 328 A1

**Description**

<u>Technical Field of the Invention</u>

The invention relates to a method of enabling automatic distortion detection of a signal. The invention further relates to a corresponding device and system.

<u>Background</u>

In order to, for example, search for distortion in a signal e.g. an audio file one method may comprise to listen to the audio file in order to determine if distortion occurs. However, this solution is very time consuming and unreliable due to the human factor i.e. differences in individual perception.

Another method may be to use the perceptual evaluation of speech quality (PESQ) algorithm to determine if distortion has occurred in the signal e.g. in the audio file. However, the PESQ algorithm requires a reference signal in order to determine whether a signal is distorted or not i.e. the PESQ algorithm requires a signal to be classified as distorted or undistorted and further requires an undistorted version of the signal to be classified in order to determine whether the signal to be classified is distorted or not. Thereby, automation of the PESQ algorithm for distortion detection is difficult.

Thus, it would be advantageous to be able to, for example, automatically determine whether a signal is distorted or undistorted.

<u>Summary</u>

The above and other advantages are obtained by a method of enabling automatic distortion detection of a signal, the method comprising receiving a plurality of test signals comprising at least one undistorted test signal and at least one distorted test signal; measuring at least one feature of each of the test signals in the plurality of test signals; defining a space of the features with a boundary by sorting the test signals in distorted and undistorted test signals, and defining the boundary such that undistorted test signals are situated within the space and distorted test signals are situated outside the space; whereby a signal may be classified as undistorted by determining a value of the at least one feature of the signal and marking the signal to be classified as undistorted if the value is contained within the space and otherwise marking the signal as distorted.

Thereby, the invention may able to pre-compile a training set containing a plurality of test signals e.g. test audio signals. The test signals may, for example, comprise an undistorted part which has been subjected to respective degrees of distortion. The degrees of distortion may, for example, be adapted to provide at least one undistorted test signal and at least one distorted test signal. From each of the test signals in the training set, a number of characteristic features may be extracted and used to, for example, define a boundary in a space. The boundary may contain the at least one undistorted test signal.

When the method has defined a boundary, no reference files/signals are required. Thus, the method provides a distortion detection scheme that can be integrated into a completely automated signal analyzing tool.

The method may additionally create the boundary on basis of what is considered, e.g. by a user as, "a good/ undistorted signal", whereby no preconceived knowledge about distortion characteristics is required. For example, the user may have marked a first number of signals as undistorted and a second number of signals as distorted and the method subsequently during analysis determines the characteristics of the distorted and undistorted signals, respectively, and on basis on the analysis determines a boundary.

In an embodiment, the plurality of test signals further comprises a number of test signals comprising an amount of distortion ranging from a minimal amount of distortion to a maximal amount of distortion.

Thereby is achieved that the method may obtain a higher accuracy by enabling a better definition of distorted/ undistorted test signals and thereby enable precise and accurate determination of whether a signal for classification is distorted or undistorted.

In an embodiment, the at least one feature is determined by high energy frames distribution and/or power spectral centroid and/or cepstral coefficients and/or zero-crossing rate.

Thereby, the method is able to determine a number of features from the plurality of test signals and/or the signal for classification. For example, the method may determine any combination of the features high energy frames distribution and/or power spectral centroid and/or cepstral coefficients and/or zero-crossing rate.

In an embodiment, the method further comprises linearly transforming a number of the at least one feature of the plurality of test signals into a second number of the at least one feature of the plurality of test signals using principal component analysis, wherein the second number is smaller than the number.

Principal component analysis (PCA) may be used to reduce the number of dimensions of features in the test signals and highlight the similarities and differences within the test signals. The benefits of this are a greatly increased efficiency as well as accuracy for example when finding and isolating distortion in a signal e.g. an audio signal.

In an embodiment, the method further comprises creating an axis in the space for each of the at least one feature; representing each of the plurality of test signals and/or the signal in the space by their respective at least one feature; and if the space comprises more than one axis, then each of the more than one axis are orthogonal to the other of the more than one axis.

Thereby, the method is able to draw up a multidimensional space where each axis represents a feature. Each of the test signals may be represented within this multidimensional space e.g. as a point in the multidimensional space.

In an embodiment, the boundary is defined in the space as a box or an ellipsoid or a circle containing the at least one feature of the undistorted test signals of the plurality of test signals.

Thereby, the boundary is able to be drawn in the multidimensional space which may enable a graphical view of the distorted and undistorted signals. The reduced-dimensionality space produced by the PCA may further be used to enable visual representation of the boundary containing undistorted signals e.g. from a six-dimensional space to a two-dimensional space.

Thus, when analyzing a signal for classification, the same features extracted from the test signals are extracted from signal for classification and it is then inserted into the reduced-dimensionality space. If the signal for classification is contained within or on the boundary, the method may conclude that the signal for classification is undistorted and otherwise that it is distorted.

The invention further relates to a method of classifying a signal comprising forming a space of features according to any of the embodiments above and, wherein the method further comprises classifying a signal as undistorted by determining a value of the at least one feature of the signal and classifying the signal as undistorted if the value is contained within the space, and otherwise classifying the signal as distorted.

Thereby, when analyzing a signal to be classified as distorted or undistorted, e.g. a signal for classification, the same characteristic features may be extracted from the signal for classification as extracted from the test signals in the training set, and if the characteristic features of the signal for classification are contained within the boundary, the method can conclude that the signal may be undistorted and otherwise that the signal may be distorted.

In an embodiment, the method further comprises performing an investigation on a signal initially classified as distorted and if the investigation disconfirm that the signal is distorted then classifying the signal as undistorted and redefining the boundary to include the signal.

Thereby, the method is able to increase accuracy by further investigating a signal which has initially been classified as distorted and if the further investigation determines that the signal was not distorted then changing the boundary to include the signal. Thus, the method is able to perform a self-correcting analysis of the boundary. Further, the method may utilize a boundary which can be updated to ensure any desired accuracy.

As mentioned, the invention also relates to a device for enabling automatic distortion detection of a signal, the device comprising at least one receiver for receiving a plurality of test signals comprising at least one undistorted test signal and at least one distorted test signal; at least one micro-processor for measuring at least one feature of each of the test signals in the plurality of test signals; and for defining a space of the features with a boundary by sorting the test signals in distorted and undistorted test signals, and defining the boundary such that undistorted test signals are situated within the space and distorted test signals are situated outside the space; whereby the device may be adapted to classify a signal as undistorted by determining a value of the at least one feature of the signal and to mark the signal to be classified as undistorted if the value is contained within the space and otherwise to mark the signal as distorted.

The device and embodiments thereof correspond to the method and embodiments thereof and have the same advantages for the same reasons.

Embodiments of the present invention also relates to a system for enabling automatic distortion detection of a signal, the system comprising a device according to the invention and wherein the system further comprises a mobile communication device connected to said device via a wireless and/or wired communication link.

The system and embodiments thereof correspond to the device and embodiments thereof and have the same advantages for the same reasons.

Brief description of the drawings

The invention will now be described more fully below with reference to the drawings, in which

Figure 1 shows a flowchart of an embodiment of a method of automating distortion detection of a signal.

Figure 2 shows a flowchart of an embodiment of a method of automating distortion detection of a signal.

Figure 3 shows a flowchart of an embodiment of a method of automating distortion detection of a signal.

Figure 4 shows an embodiment of a test device.

Figure 5 shows a system comprising a test device and a mobile communication device.

Figure 6 shows an embodiment of a boundary determined by an embodiment of a method.

Detailed description

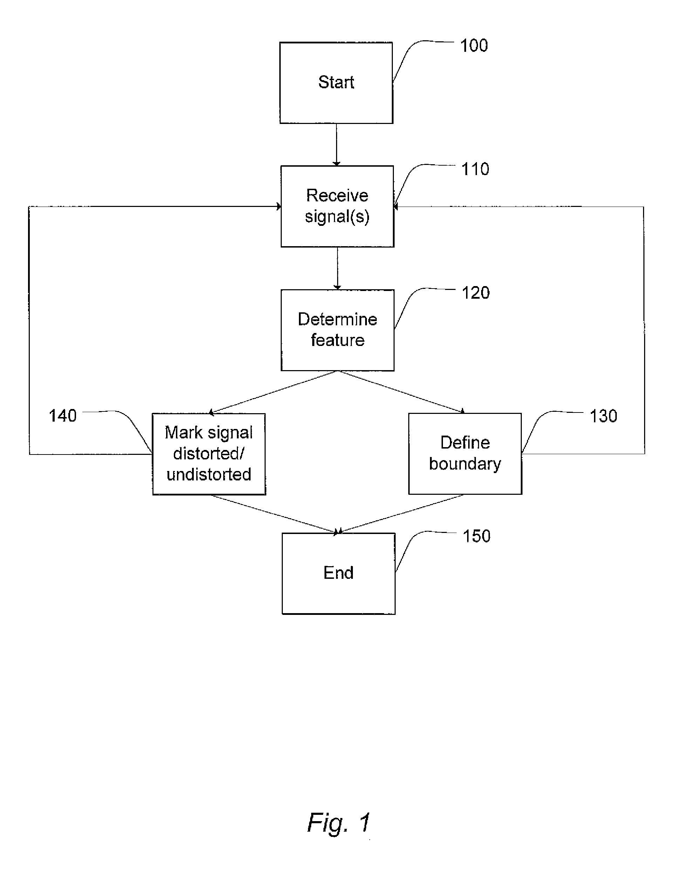

Figure 1 shows a flowchart of an embodiment of a method of automating distortion detection of a signal.
The method starts in step 100.
In step 110, a test device may receive a plurality of test signals comprising at least one undistorted test signal and at least one distorted test signal. Alternatively or additionally, the test device may receive at least one signal for classification. The test signals and/or the signals for classification may be contained in one or more digital files.
The test signals may, for example, comprise a piece of audio signal which has been distorted with a varying amount of distortion such that a first test signal comprises the audio signal with a first amount of distortion and a second test signal comprises the audio signal with a second amount of distortion. The amount of distortion may range from no distortion e.g. minimal distortion, i.e. providing an undistorted audio signal, to a maximal amount of distortion, i.e. providing e.g. a completely distorted audio signal, and anywhere in between the minimal distortion and maximal distortion.
In an example, the test signals may be generated by playing an audio sequence to a mobile communication device, such as for example a mobile cellular telephone, and recording the audio sequence and surrounding background noise via the mobile communication device's microphone for a plurality of locations e.g. at a subway station and at a motorway intersection and in a mall and in a sound proof room etc.
The plurality of test signals may comprise an undistorted test signal and a distorted test signal.
During or after recording of the test signals, the mobile communication device may, for example, be connected to the test device via a wireless and/or wired communication links such as for example a Bluetooth radio link or via an Universal Serial Bus cable in order to transfer the test signals from the mobile communication device to the test device.
The test signals may additionally or alternatively comprise a video signal and/or any other type of signal which may be distorted.
In step 120, the test device may determine at least one first feature of each of the test signals in the plurality of test signals. Alternatively, the test device may determine the at least one first feature of the signal for classification.
Feature determination/extraction may, for example, be performed when dealing with time-domain signals, such as for example audio and/or video signals, because time-domain signals may contain a large amount of data which may make them unsuitable for direct classification.
Features may be derived from a frequency-domain or a time-domain. For example in the case of audio (test) signals, time-domain classification may be used. Alternatively or additionally, frequency-domain classification may be used for audio (test) signal feature derivation.
Features may be extracted from the test signals and/or from signals for classification.
Examples of features that can be utilized when the signals are audio signals may include Cepstral Coefficients, Power Spectral Centroid, High Energy Frames Distribution and Zero-crossing Rate.
**High Energy Frames Distribution (HEFD)** feature extraction of a feature in a signal comprises a measure of the signal's amplitude variance in the time-domain; however, the amplitude variance does not necessarily correspond to the actual flow in time.
The signal may be divided into a number of frames, *xframe*=*M*, from which frames the maximum amplitude, *xmax*, may be determined. A mean amplitude, *xmean*, of the signal may be calculated on the basis of the determined maximum amplitudes. Frames with a maximum lower than the mean, possibly multiplied with a scaling factor k, may be excluded from a resulting set of frames HEF(m). The remaining frames, i.e. the frames with a maximum above or equal to the mean, may be sorted by amplitude. The result may be a representation of the distribution of the amplitudes greater than or equal to the mean.
Mathematically HEFD can be described as:

$$x\max(m) = \max(xframe(m));$$

$$xmean = \frac{1}{M+1}\sum_{m=0}^{M} x\max(m);$$

$$HEF(m) = x\max(m) \cdot II(x\max \geq xmean \cdot k);$$

where HEF(m) is a resulting vector containing the high energy frames, M is the total number of frames and II(A) is an indicator function with the value 1 if A is true and 0 if A is false.

**Power spectral centroid (PSC)** extraction of a feature in a signal comprises determining where the "center of mass" of a spectrum of the signal is located in the frequency-domain. The power spectral centroid feature may be a measure of the spectral shape of the signal. The power spectral centroid feature can also be described as "the brightness of a signal". The power spectral centroid feature PSC may be defined as:

$$PSC = \frac{\sum_{n=0}^{N-1} k \cdot |X(k)|^2}{\sum_{n=0}^{N-1} |X(k)|^2},$$

where |X(k)| may represent the magnitude of a Fourier Transform of the signal at frequency k. Analyzing the location of the power spectral centroid may provide an approximation of the signal's spectral characteristics.

**Cepstral coefficient (CC)** extraction of a feature in a signal comprises using cepstral coefficients c(k) to model spectral energy distribution, which can be mathematically expressed as:

$$c(k) = IDFT\{\log|DFT(x(k))|\},$$

where DFT denotes a discrete Fourier-transform and IDFT denotes an inverse discrete Fourier-transform. log may be the natural logarithm with base number e. x(k) may be the signal sample at frequency n.

The cepstral coefficients may be calculated in time frames and the result can be further processed by calculating the mean or variance of the coefficients.

In an embodiment, only the first M cepstral coefficients in each frame are used to derive the signal's cepstral coefficient feature. If all cepstral coefficients are used, a precise representation of the spectrum may be obtained and if some cepstral coefficients are excluded, a more coarse spectral shape may be obtained. The precision of the Cepstral Coefficients extraction of a feature may be determined by the number of cepstral coefficients used.

**Zero-crossing Rate (ZCR)** extraction of a feature comprises determining how often, per sample, a signal changes sign in the time domain i.e. how many times the signal crosses the x-axis. For example, a sine wave sin(x), without any DC-offset, crosses the x-axis twice per period [0, 2-π[. The zero-crossing rate can be used as a form of frequency detector. Mathematically, the zero-crossing rate can be described as:

$$zcr = \frac{1}{N}\sum_{n=0}^{N-1} II[x(n)x(n-1) < 0],$$

where x(n) is a vector with the length N representing the signal and II [A] is an indicator function which produces a 1 if A is true and a 0 otherwise.

In an embodiment, the method may extract six features such as ZCR, PSC, CC, HEFD, mean of HEFD and variance of HEFD. Alternatively, the method may extract a plurality of features such as for example two features (e.g. ZCR and HEFD), three features (e.g. ZCR, PSC and CC), etc. In general, the higher the number of features extracted, the better the resolution of the distortion detection.

In an embodiment, the type of features extracted (e.g. CC, PCR, ZCR, HEFD) are hand-crafted i.e. the type of features are selected by e.g. an operator of the test device.

In step 130, the test device may define a boundary containing a first part of the at least one first feature of the plurality of test signals and wherein the first part contains the at least one first feature of the at least one undistorted test signal.

For example, the boundary may be defined as an envelope containing the features of the undistorted test signals. Thereby may be achieved an envelope/boundary including the undistorted signals and excluding the distorted signals. Thus, a test signal contained within or on the boundary may thus be defined as undistorted and a test signal outside the boundary may be defined as distorted. Additionally, a signal for classification contained within or on the boundary may thus be defined as undistorted and a signal for classification outside the boundary may be defined as distorted.

After step 130, the method may end in step 150, or the method may return to step 110 in order to, for example receive a number of test signals and/or a number of signals to be classified as distorted or undistorted.

In the case where the method returns to step 110 to receive a number of test signals for classification, the method may perform steps 110, 120 and 130.

In the case where the method returns to step 110 for reception of a number of signals, the method may perform steps 110, 120 and 140. Thus, the test device may receive a number of signals to be classified. For example, the test device may receive one audio signal.

In the case where the method received a number of signals for classification in step 110, the test device may determine, in step 120, the at least one first feature of the signal for classification.

For example, the test device may determine the same features of the signal for classification as determined for the test signals i.e. e.g. HEFD, PSC, CC, CC, etc. The features of the signal for classification may therefore be determined in the same manner as the features determined for the test signals.

In step 140, the test device may determine if the at least one first feature of the signal for classification is contained within or on the boundary and in the affirmative marking the signal for classification as undistorted. Otherwise, i.e. if the at least one feature of the signal for classification is contained outside the boundary, then marking the signal foe classification as distorted.

Thus, the test device may extract the same number and type of features of the signal for classification as the features extracted for the test signals. The extracted features of the signal for classification may be related to the boundary and if the features of the signal for classification are contained within or on the boundary, then the test device may conclude that the signal for classification is undistorted.

The determination may, for example, be performed graphically by plotting the boundary and the features of the signal for classification in a space and thus determine graphically whether the signal's features are contained within the boundary.

Alternatively or additionally, the determination may, for example, be performed mathematically by defining a functional expression for the boundary e.g. for the elements contained within or on the boundary. Thus, the method may determine if the signal for classification's features satisfy the functional expression, i.e. if they are contained within or on the boundary (undistorted) or not (distorted).

After step 140, the method may end in step 150, or the method may return to step 110 in order to, for example receive a number of test signals and/or a number of signals to be classified as distorted or undistorted.

In step 150, the method ends.

In an embodiment, the method of Figure 1 initially performs steps 110, 120 and 130 on a plurality of test signals and subsequently performs steps 110, 120 and 140 on at least one signal for classification.

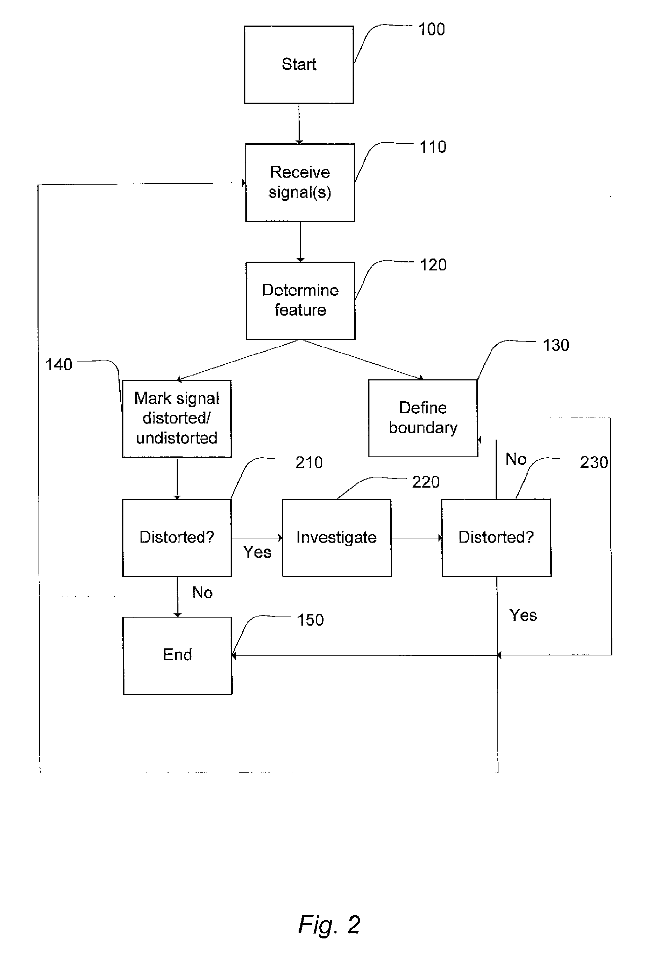

Figure 2 shows a flowchart of an embodiment of a method of automating distortion detection of a signal.

The method starts in step 100. Steps 110 - 140 of Figure 2 may be identical to steps 110 - 140 of Figure 1.

In step 210, the test device may, if a signal has been marked as distorted i.e. the signal is contained outside the boundary, select the distorted signal for further processing and the method may proceed to step 220.

If the signal has been marked as undistorted, the test device may proceed to step 150 i.e. end of method or the test device may proceed to step 110 in order to receive a number of signals for classification and/or test signals.

In step 220, the test device may further process/investigate the distorted signal. For example, the test device may enable an operator of the test device to listen to the distorted signal and for the operator to indicate to the test device whether the distorted signal is correctly classified as distorted or not. For example, the test device may comprise a loudspeaker on which the test device may play a signal marked as distorted. The test device may further comprise an OK and a cancel button enabling the operator to agree or disagree with the classification of the signal as distorted.

In step 230, if the investigation confirmed that the signal is distorted then the method may proceed to step 150 i.e. end of the method, or the method may proceed in step 110 i.e. the test device may receive a number of signals for classification and/or test signals.

If the investigation disconfirmed that the signal was distorted i.e. the investigation determined that the signal was undistorted, then the method may proceed to step 130, in which step the test device may revise the boundary such as to include the signal first classified as distorted in step 140 and subsequently classified as undistorted in step 220. From step 130, the method may proceed to step 150 i.e. end of the method or to step 110 i.e. the test device may receive a number of signals for classification and/or test signals.

In an embodiment, the method of figure 2 may further comprise an additional step between step 120 and 130, in which additional step the test device may linearly transform a first number of the at least one first feature of the plurality of test signals into a second number of the at least one first feature of the plurality of test signals using principal component analysis, wherein the second number is smaller than the first number.

Thereby, the test device is able to, for example, linearly transform a number N of features, e.g. HEFD, PSC, etc. The linear transformation may provide a second number M of second features, which second features are uncorrelated. The second number of features M may be smaller than the number of features N i.e. M<N. The linear transformation may, for example, include a principal component analysis.

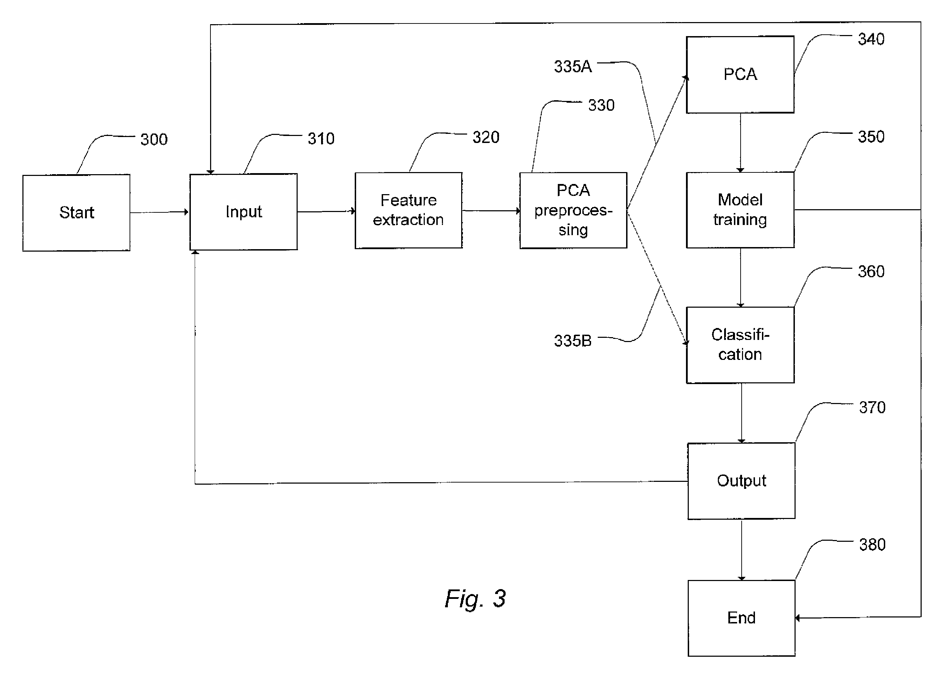

Figure 3 shows a flowchart of an embodiment of a method of automating distortion detection of a signal.

The method starts in step 300.

In step 310, the test device may receive one or more inputs. For example, step 310 may be identical to step 110 above. The one or more inputs may, for example, comprise a distorted test signal and an undistorted test signal and/or a signal to be classified.

In step 320, the test device may extract one or more features from the input. For example, step 320 may be identical to step 120.

In step 330, the test device may perform principal component analysis (PCA) pre-processing on a number of the extracted features e.g. all the extracted features.

For example, the PCA pre-processing may comprise scaling/normalizing the features' variances before eigen-analysis (PCA), because the eigen-values may be proportional to a numerical range of the features. The scaling/normalization may enable the variances of the features to be compared. After scaling/normalization the features' variances may , for example, be in the range from [-1, 1]. Thus, the scaling of the features' variances may in mathematical form be written as:

$$x_{scaled}(n) = \frac{x(n) - x_{mean}}{\sigma},$$

where $x_{scaled}(n)$ may be the scaled variance of feature n of e.g. $N_{total}$ features, $x(n)$ may be feature number n of $N_{total}$ features, $x_{mean}$ may be the mean of the $N_{total}$ features, and $\sigma$ may be the square root of the variance within the signal, i.e. the standard deviation of the signal.

If, for example, the test device is in the process of defining a boundary (model training) using a number of test signals then the test device may proceed from step 330 to step 340 via 335A. If, for example, the test device is in the process of classifying a signal for classification, then the test device may proceed from step 330 to step 360 via step 335B.

In step 340, the test device may perform a principal component analysis (PCA). Thereby, the test device may find a linear transform such that when applied to the features e.g. the PCA pre-processed features then new uncorrelated features are obtained.

The PCA may comprise, for example, calculating a covariance matrix of the PCA pre-processed (e.g. normalized)features. From the covariance matrix, a total number of eigen-values and a total number of eigen-vectors may be derived. The eigenvector with the highest eigen-value may correspond to a principal component of the input.

The total number of eigen-values may be ordered from highest to lowest, e.g. in order of their significance and the corresponding eigenvectors may be rearranged accordingly.

A principal component matrix ($M_{PCA}$) may be created using a number of the total number of eigenvectors e.g. the most significant of the total number of eigenvectors i.e. the eigenvectors with the largest eigen-values. The number of eigenvectors may depend on the demands of the application of the principal component matrix. For example, in order to compress and reduce dimensionality of the input, the number of eigenvectors used to create the principal component matrix may be smaller than the total number of eigenvectors. Additionally, in order to be able to visualize the input, the number of eigenvectors may, for example, be reduced to three or two or one e.g. the number of eigenvectors may be reduced to the principal component and the eigenvectors having the second and third largest eigenvalues.

The principal component matrix may be transposed and multiplied on the left of the transposed PCA pre-processed input in order to obtain the original data (input) expressed in terms of the vectors comprised in the principal component matrix:

$$M_{FinalData} = M_{PCA}^T \cdot x_{scaled}^T \,,$$

where the superscript T denotes the mathematical function of transposing i.e. the transpose of an $m \times n$ matrix **A** is the

$n \times m$ matrix $\quad A_{ij}^T = A_{ji} \quad$ for $1 \le i \le n$ and $1 \le j \le m$.

In step 350, the test device may perform model training. The model training may, for example, comprise analyzing a number of test signals. The test signals may, for example, comprise a number of distorted and undistorted test signals such as for example a number of distorted and undistorted audio signals.

From the test signals, a boundary may be defined which boundary comprising the undistorted test signals.

In an embodiment, the boundary may be defined in a multi-dimensional space containing the features of the undistorted signals contained in the boundary and wherein the features of the principal component matrix may constitute the axis of the multi-dimensional space.

From step 350, the test device may proceed to step 380 i.e. end of the method or the test device may proceed to step 310 i.e. input of test signals and/or signals to be classified.

In step 360, the test device may classify a signal for classification. Any signal comprising one or more features lying outside the boundary may be classified as distorted signals.

If a signal is classified as distorted, further investigations may be applied by the test device in order to confirm or disconfirm whether the signal is distorted.

If the further investigations determine that the signal to be classified is not distorted, then the signal may be included in the boundary in order to increase accuracy of the method.

In an embodiment, the number of test signals may depend on the number of dimensions used in the PCA, i.e. the number of rows in the transposed principal component matrix. Additionally, the test signals may contain both distorted and undistorted signals e.g. both distorted and undistorted audio signals in order to obtain maximum class separation.

In step 370, the test device may output the result of the classification of the signal for classification. For example, the test device may mark the signal for classification as either distorted or undistorted e.g. by setting a marker included in or attached to the signal for classification. Alternatively or additionally, the test device may prompt an operator of the test device whether the signal for classification is distorted or undistorted.

From step 370, the test device may proceed to step 380 i.e. end of the method or the test device may proceed to step 310 i.e. input of test signals and/or signals to be classified.

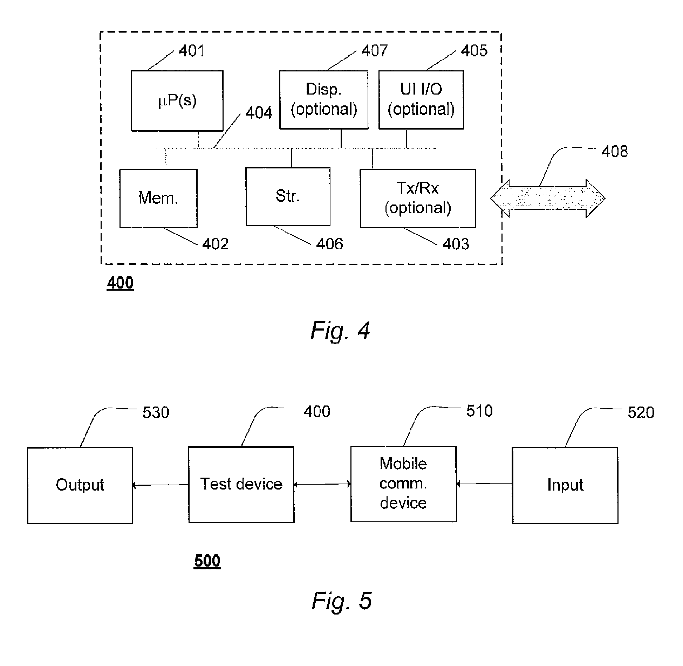

Figure 4 shows an embodiment of a test device 400. The test device 400 may comprise one or more micro-processors 401 connected with a main memory 402 and e.g. a storage device 406 via an internal data/address bus 404 or the like. Additionally, the test device 400 may also be connected to or comprise a display 407 and/or communication means 403, e.g. a receiver and transmitter unit, for communication with one or more remote systems via one or more wireless and/or wired communication links 408 such as, for example, a Bluetooth communication link, a WLAN communication link, an Infrared communication link, a fiber-optical communication link or the like. The test device 400 may additionally comprise a user interface input/output unit 405 through which an operator may interact with the test device 400. Examples of user interface input/output units are a computer mouse and a computer keyboard.

The test device 400 may, for example, receive a plurality of test signals and/or one or more signals for classification via said communication means 403.

The memory 402 and/or storage device 406 may store and retrieve the relevant data together with executable computer code for providing the functionality according to the invention. For example, the memory 402 and storage device 406 may be used by the test device 400 to store the received plurality of test signals and/or the one or more signals for classification. Additionally, the test device may use the memory 402 and/or storage device 406 to store executable computer program code such as, for example, computer program code enabling PCA pre-processing and PCA.

The storage device 406 comprises one or more storage devices capable of reading and possibly writing blocks of data, e.g. a DVD, CD, optical disc, PVR, etc. player/recorder and/or a hard disk (IDE, ATA, etc.), floppy disk, smart card, PC card, USB storage device, etc.

The memory 402 may be a semiconductor type of storage device such as for example random access memory e.g. SRAM and/or DRAM, flash memory or the like.

The micro-processor(s) 401 may be responsible for generating, handling, processing, calculating, etc. the relevant parameters according to the present invention. The micro-processor(s) 401 may, for example, execute computer program code enabling the micro-processor(s) 401 to perform actions such as, for example, PCA pre-processing and/or PCA and/or investigation of distorted signals and/or marking signals in the memory 402 and/or storage device 406 as distorted/undistorted. The micro-processor(s) 401 may perform such actions by, for example, retrieving the computer program code for the respective actions from e.g. the memory 402 and/or storage device 406 and apply the actions to the signals stored in the memory 402 and/or storage device 406.

The display 407, e.g. a CRT and/or LCD screen, may, for example, be responsible for displaying to an operator of the test device a status of a signal e.g. whether the signal is distorted or undistorted. Additionally or alternatively, the display 407 may display information regarding processing status. Alternatively or additionally, the display 407 may display a graphical representation of the boundary and the signals contained within or on it and the signals excluded from the boundary.

The user interface input/output unit 405, e.g. a computer keyboard or a computer mouse, may enable an operator of the test device 400 to indicate whether a signal marked distorted and investigated by the operator has been correctly classified. The user interface input/output 405 may additionally comprise a loudspeaker e.g. for playing an audio file initially marked as distorted in order to enable an operator to confirm or disconfirm the classification.

Figure 5 shows a system comprising a test device 400 and a mobile communication device 510 such as a mobile cellular telephone, which mobile communication device 510 may receive an input 520. The test device 400 may output a result 530 containing a classification of the input 520 e.g. whether the input is distorted or undistorted.

For example, the input 520 may comprise a number of audio sequences e.g. two audio sequences such as a sequence comprising a male voice and a sequence comprising a female voice. The audio sequence may be played to the mobile communication device 510 when the mobile communication device 510 is subjected to a number of background noises e.g. at a subway station and at a motorway intersection and in a mall and in a sound proof room etc. Additionally, the input may comprise the audio sequence without any background noise.

The mobile communication device 510 may be connected to the test device 400 via e.g. a wired and/or a wireless communication link and thereby, the test device 400 may record the audio sequences and the background noise via the mobile communication device's microphone in the memory 402 and/or in the storage device 406.

In the test device 400, each of the recorded audio sequences may be classified as distorted or undistorted as disclosed above. The result of the classification may be output 530 e.g. to an operator of the test device 400.

In an embodiment, the test device 400 may be able to transmit one or more hardware codes to the mobile communication device 510 in order to, for example, correct one or more errors detected by the test device 400 in the mobile communication device 510 via classification of the input 520 recorded by the test device 400 via said mobile communication device's 510 microphone.

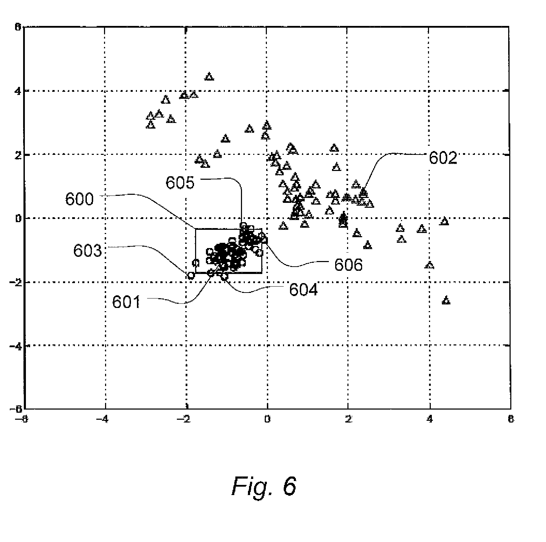

Figure 6 shows an embodiment of a boundary 600 determined by an embodiment of a method. Using PCA, a six dimensional set of test signals have been reduced to a two dimensional set of test signals e.g. the two dimensions spanned by the two eigenvectors having the highest eigen-values. The test signals comprise 60 different undistorted signals 601 such as audio signals and 60 differently undistorted signals 602 such as audio signals. Each test signal is represented in the two-dimensional space as a circle. The boundary 600 has been defined as a square box in the two-dimensional space and the boundary contains the undistorted audio signals 601. Alternatively, the boundary may, for example, be defined as a circle containing the undistorted audio 601. Alternatively, the boundary may be defined as any form containing or substantially containing the undistorted audio 601.

In an embodiment, a number of undistorted signals from the test signals may be excluded from the boundary. For example, the undistorted signal with the largest x-value (largest value on the abscissa) and the undistorted signal with the least x-value (least value on the abscissa) and the undistorted signal with the largest y-value (largest value on the ordinate) and the undistorted signal with the least y-value (least value on the ordinate) may be excluded from the boundary thereby possibly narrowing down the size of the boundary. Thereby, the invention may be able to exclude extreme undistorted signal values from the boundary. Thus, the exclusion of a number of undistorted signals from the boundary may be performed in order to prevent one or more uncharacteristic (e.g. undistorted signals deviating from the majority of undistorted signals) undistorted signals from making the boundary too large e.g. over-inclusive.

As an example, in Figure 6 undistorted signals 603 - 606 have been excluded from the boundary because 603 is the undistorted signal with the least x-value, 604 is the undistorted signal with the least y-value, 605 is the undistorted signal with the largest y-value and 606 is the undistorted signal with the largest x-value.

Although various embodiments of the present invention have been described and shown, the invention is not restricted thereto, but may also be embodied in other ways within the scope of the subject-matter defined in the following claims.

In general, any of the technical features and/or embodiments described above and/or below may be combined into one embodiment. Alternatively or additionally any of the technical features and/or embodiments described above and/or below may be in separate embodiments. Alternatively or additionally any of the technical features and/or embodiments described above and/or below may be combined with any number of other technical features and/or embodiments described above and/or below to yield any number of embodiments.

In device claims enumerating several means, several of these means can be embodied by one and the same item of hardware. The mere fact that certain measures are recited in mutually different dependent claims or described in different embodiments does not indicate that a combination of these measures cannot be used to advantage.

It should be emphasized that the term "comprises/comprising" when used in this specification is taken to specify the presence of stated features, integers, steps or components but does not preclude the presence or addition of one or more other features, integers, steps, components or groups thereof.

## Claims

1. A method of enabling automatic distortion detection of a signal, the method comprising

   a. receiving (110, 410) a plurality of test signals comprising at least one undistorted test signal and at least one distorted test signal;
   b. measuring (120, 420) at least one feature of each of the test signals in the plurality of test signals;
   c. defining (130, 450) a space of the features with a boundary by sorting the test signals in distorted and undistorted test signals, and defining the boundary such that undistorted test signals are situated within the space and distorted test signals are situated outside the space;
   d. whereby a signal may be classified as undistorted by determining (140, 460) a value of the at least one feature of the signal and marking the signal to be classified as undistorted if the value is contained within the space and otherwise marking the signal as distorted.

2. The method according to claim 1, wherein the plurality of test signals further comprises a number of test signals comprising an amount of distortion ranging from a minimal amount of distortion to a maximal amount of distortion.

3. The method according to claim 1 or 2, wherein the at least one feature is determined by high energy frames distribution and/or power spectral centroid and/or cepstral coefficients and/or zero-crossing rate.

4. The method according to anyone of claims 1 to 3, wherein the method further comprises linearly transforming (310, 440) a number of the at least one feature of the plurality of test signals into a second number of the at least one feature of the plurality of test signals using principal component analysis, wherein the second number is smaller than the number.

5. The method according to anyone of claims 1 to 4, wherein the method further comprises creating an axis in the space for each of the at least one features; representing each of the plurality of test signals and/or the signal in the space by their respective at least one feature; and if the space comprises more than one axis, then each of the more than one axis are orthogonal to the other of the more than one axis.

6. The method according to anyone of claims 1 to 5, wherein the boundary is defined in the space as a box or an ellipsoid or a circle containing the at least one feature of the undistorted test signals of the plurality of test signals.

7. A method of classifying a signal, the method comprising forming a space of features according to any one of claims 1 to 6, wherein the method further comprises classifying a signal as undistorted by determining (140, 460) a value of the at least one feature of the signal and classifying the signal as undistorted if the value is contained within the space, and otherwise classifying the signal as distorted.

8. The method according to claim 7, wherein the method further comprises performing an investigation (220) on a signal initially (140) classified as distorted and if the investigation disconfirms (230) that the signal is distorted then classifying the signal as undistorted and redefining the boundary to include the signal.

9. A device 400 for enabling automatic distortion detection of a signal, the device comprising

   a. at least one receiver (403) for receiving (110, 410) a plurality of test signals comprising at least one undistorted test signal and at least one distorted test signal;
   b. at least one micro-processor (401) for measuring (120, 420) at least one feature of each of the test signals in the plurality of test signals; and for
   c. defining (130, 450) a space of the features with a boundary by sorting the test signals in distorted and undistorted test signals, and defining the boundary such that undistorted test signals are situated within the space and distorted test signals are situated outside the space; whereby the device may be adapted to
   d. classify a signal as undistorted by determining (140, 460) a value of the at least one feature of the signal and to mark the signal to be classified as undistorted if the value is contained within the space and otherwise to mark the signal as distorted.

10. The device according to claim 9, wherein the plurality of test signals further comprises a number of test signals comprising an amount of distortion ranging from a minimal amount of distortion to a maximal amount of distortion.

11. The device according to claim 9 or 10, wherein the at least one feature is determined by the at least one microprocessor by high energy frames distribution and/or power spectral centroid and/or cepstral coefficients and/or zero-crossing rate.

12. The device according to anyone of claims 9 to 11, wherein the at least one microprocessor (401) is further adapted to linearly transform (310, 440) a number of the at least one feature of the plurality of test signals into a second number of the at least one feature of the plurality of test signals using principal component analysis, wherein the second number is smaller than the first number.

13. The device according to anyone of claims 9 to 12, wherein the at least one micro-processor is further adapted to create an axis in the space for each of the at least one features; and to represent each of the plurality of test signals and/or the signal in the space by their respective at least one feature; and if the space comprises more than one axis, then each of the more than one axis are orthogonal to the other of the more than one axis.

14. The device according to anyone of claims 9 to 13, wherein the device is adapted to define the boundary in the space as a box or an ellipsoid or a circle containing the at least one feature of the undistorted test signals of the plurality of test signals.

15. A device for classifying a signal, the device comprises the device according to any one of claims 9 to 14, wherein the device further comprises a classifier for classifying a signal as undistorted by determining (140, 460) a value of the at least one feature of the signal and classifying the signal as undistorted if the value is contained within the space, and otherwise classifying the signal as distorted.

16. The device according to claim 15, wherein the at least one micro-processor is further adapted to perform an investigation (220) on a signal initially (140) classified as distorted and if the investigation disconfirms (230) that the signal is distorted then the device is adapted to redefine the boundary to include the signal.

17. A system (500) for enabling automatic distortion detection of a signal, the system comprising a device (400) according to anyone of claims 9 to 16 and wherein the system (500) further comprises a mobile communication device (510) connected to said device (400) via a wireless and/or wired communication link (408).

*Fig. 1*

*Fig. 2*

Fig. 3

**401** μP(s)

**407** Disp. (optional)

**405** UI I/O (optional)

**404**

**402** Mem.

**406** Str.

**403** Tx/Rx (optional)

**408**

400

*Fig. 4*

**530** Output

**400** Test device

**510** Mobile comm. device

**520** Input

500

*Fig. 5*

*Fig. 6*

Europäisches
Patentamt

European
Patent Office

Office européen
des brevets

## EUROPEAN SEARCH REPORT

Application Number

EP 08 17 0131

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUA YUAN ET AL: "Classification of Speech Degradations at Network Endpoints Using Psychoacoustic Features" ELECTRICAL AND COMPUTER ENGINEERING, 2007. CCECE 2007. CANADIAN CONFERENCE ON, IEEE, PI, 1 April 2007 (2007-04-01), pages 1602-1605, XP031176843 ISBN: 978-1-4244-1020-0 * abstract * * figure 1 * p. 1602, Section I, Introduction p. 1602, Section II, Algorithm Description ----- | 1-17 | INV. G10L19/00 H04M3/22 |
| X | HUA YUAN ET AL: "Degradation-Classification Assisted Single-Ended Quality Measurement of Speech" PROCEEDINGS, INTERSPEECH - EUROSPEECH, [Online] 30 August 2007 (2007-08-30), pages 1-4, XP002530823 Antwerp, Belgium Retrieved from the Internet: URL:http://qlink.queensu.ca/~2thf/falk/pdf /YuanFalkChan_IS2007.pdf> [retrieved on 2009-06-05] * abstract; figure 1 * ----- -/-- | 1-17 | |

| | TECHNICAL FIELDS SEARCHED (IPC) |
|---|---|
| | G10L H04M |

The present search report has been drawn up for all claims

| Place of search | Date of completion of the search | Examiner |
|---|---|---|
| Munich | 14 October 2009 | Chétry, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**Europäisches Patentamt**
**European Patent Office**
**Office européen des brevets**

# EUROPEAN SEARCH REPORT

Application Number

EP 08 17 0131

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ITU INTERNATIONAL TELECOMMUNICATION UNION: "SINGLE-ENDED METHOD FOR OBJECTIVE SPEECH QUALITY ASSESSMENT IN NARROW-BAND TELEPHONY APPLICATIONS (SERIES P: TELEPHONE TRANSMISSION QUALITY, TELEPHONE INSTALLATIONS, LOCAL LINE NETWORKS OBJECTIVE MEASURING APPARATUS)" ITU-T RECOMMENDATIONS, INTERNATIONAL TELECOMMENDATION UNION, GENEVA, CH, vol. P.563, 1 May 2004 (2004-05-01), page 66PAGES, XP008070393 ISSN: 1680-3329 * the whole document * ----- | 1-17 | |

TECHNICAL FIELDS SEARCHED (IPC)

The present search report has been drawn up for all claims

| Place of search | Date of completion of the search | Examiner |
|---|---|---|
| Munich | 14 October 2009 | Chétry, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)